# EUROPEAN PATENT SPECIFICATION

(11) **EP 3 139 002 B1**
(45) Date of publication and mention of the grant of the patent: **27.02.2019**
(21) Application number: 16185255.3
(22) Date of filing: 23.08.2016
(51) Int. Cl.: F01D 5/22

(54) **DAMPER PIN FOR TURBINE BLADES AND CORRESPONDING TURBINE ENGINE**
DÄMPFENDER STIFT FÜR TURBINENSCHAUFEL UND ZUGEHÖRIGES TURBINENKRAFTWERK
GOUPILLE AMORTISSANTE POUR AUBES DE TURBINE ET MOTEUR À TURBINE ASSOCIÉ

(30) Priority: 03.09.2015 US 201514844392
(43) Date of publication of application: 08.03.2017
(73) Proprietor: General Electric Company, Schenectady, NY 12345 (US)
(72) Inventor: KAREFF, Spencer A., Greenville, 29615 (US); PURAM, Gayathri, 560066 Bangalore (IN)
(74) Representative: Lee, Brenda

(56) References cited:
- EP-A1- 2 472 065
- EP-A1- 3 043 085
- US-A- 3 881 844
- US-A1- 2006 257 262
- US-A1- 2013 276 456

## Description

### FIELD OF THE INVENTION

The present invention generally relates to a turbomachine having multiple circumferentially aligned turbine blades. More particularly, this invention involves a damper pin having an outer body and a core body disposed therein for providing vibration damping between adjacent turbine blades.

### BACKGROUND OF THE INVENTION

A turbine blade, also known as a turbine bucket or turbine rotor blade, converts energy from a flowing fluid such as hot combustion gas or steam into mechanical energy by causing a rotor shaft of a turbomachine to rotate. As the turbomachine transitions through various operating modes, the turbine blades are subjected to both mechanical and thermal stresses.

A turbine blade generally includes an airfoil that extends radially outwardly from a platform, a shank that extends radially inwardly from the platform and a dovetail or mounting portion that extends radially inwardly from the shank. The dovetail of each turbine blade is secured within a complementary slot defined in a rotor wheel or disk. The rotor wheel is coupled to the rotor shaft.

During engine operation, vibrations may be introduced into the turbine blades. For example, fluctuations in flow of the hot combustion gases or steam may cause them to vibrate. One basic design consideration for turbomachine designers is to avoid or to minimize resonance with natural frequencies of the turbine blades and the dynamic stresses produced by forced response and/or aero-elastic instabilities, thus controlling high cycle fatigue of the turbine blades. In order to improve the high cycle fatigue life of a turbine blade, vibration dampers are typically provided below and/or between the platforms to frictionally dissipate vibratory energy and reduce the corresponding amplitude of vibration during operation. The amount of vibrational energy that is removed by the vibration damper is a function of the dynamic weight of the vibration damper and the reaction loads.

Although known dampers may be largely adequate during typical operations, there is a desire to improve overall damper effectiveness. Prior attempts to accomplish damping of vibrations have included round damper pins, sheet metal flat dampers, or complex wedge shaped dampers. Often true damper performance of these types of dampers is not known until the first engine test. However, at that time, the damper pocket geometry in the turbine blades is locked in by hard tooling. Thus, if the damper does not perform as expected, then a potentially expensive tooling rework may be required. Accordingly, there is desire for a damping pin that provides a natural frequency tuning tool for resonant mode excitation avoidance and that enables independent mode tuning options without necessitating changes to the design of an existing turbine blade.

### BRIEF DESCRIPTION OF THE INVENTION

Aspects and advantages of the invention are set forth below in the following description, or may be obvious from the description, or may be learned through practice of the invention.

One embodiment of the present invention is a damper pin for damping adjacent turbine blades coupled to a rotor shaft. The damper pin includes an outer body having a center portion disposed between a first end portion and a second end portion. The first end portion, center portion and second end portion define a generally arcuate top portion of the outer body. At least a portion of the outer body defines an opening that extends axially therethrough. The damper pin further includes a core body that is disposed at least partially within the opening of the outer body. At least one of the first end portion and the second end portion of the outer body is semi-cylindrical.

Another embodiment of the present invention is a turbine engine. The turbine engine includes a rotor shaft that extends axially within the turbine engine and an adjacent pair of turbine blades that are coupled to the rotor shaft. Each turbine blade at least partially defines a groove that extends along a slash face of the corresponding turbine blade. The turbine engine further includes a damper pin as described above that is disposed within the groove between the adjacent turbine blades.

Those of ordinary skill in the art will better appreciate the features and aspects of such embodiments, and others, upon review of the specification.

### BRIEF DESCRIPTION OF THE DRAWINGS

A full and enabling disclosure of the present invention, including the best mode thereof to one skilled in the art, is set forth more particularly in the remainder of the specification, including reference to the accompanying figures, in which:
FIG. 1 illustrates a functional diagram of an exemplary gas turbine as may incorporate at least one embodiment of the present invention;
FIG. 2 is a perspective view of an exemplary turbine blade according to at least one embodiment of the present invention;
FIG. 3 is a schematic illustration of a damper pin disposed between circumferentially adjacent turbine blades according to at least one embodiment of the present invention;
FIG. 4 is a side view of an exemplary damper pin according to one embodiment of the present invention;
FIG. 5 is an end view of the exemplary damper pin as shown in FIG. 4;
FIG. 6 is a perspective side view of the exemplary damper pin as shown in FIG. 4, according to one embodiment of the present invention;
FIG. 7 is a side view of an exemplary core body for the damper pin as shown in FIG. 4, according to at least one embodiment of the present invention;
FIG. 8 is a perspective side view of the exemplary damper pin as shown in FIG. 4, according to one embodiment of the present invention; and
FIG. 9 is a perspective side view of the exemplary damper pin as shown in FIG. 4, according to one embodiment of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, and the term "axially" refers to the relative direction that is substantially parallel and/or coaxially aligned to an axial centerline of a particular component.

Although an industrial or land based gas turbine is shown and described herein, the present invention as shown and described herein is not limited to a land based and/or industrial gas turbine unless otherwise specified in the claims. For example, the invention as described herein may be used in any type of turbomachine including but not limited to a steam turbine, an aircraft gas turbine or marine gas turbine.

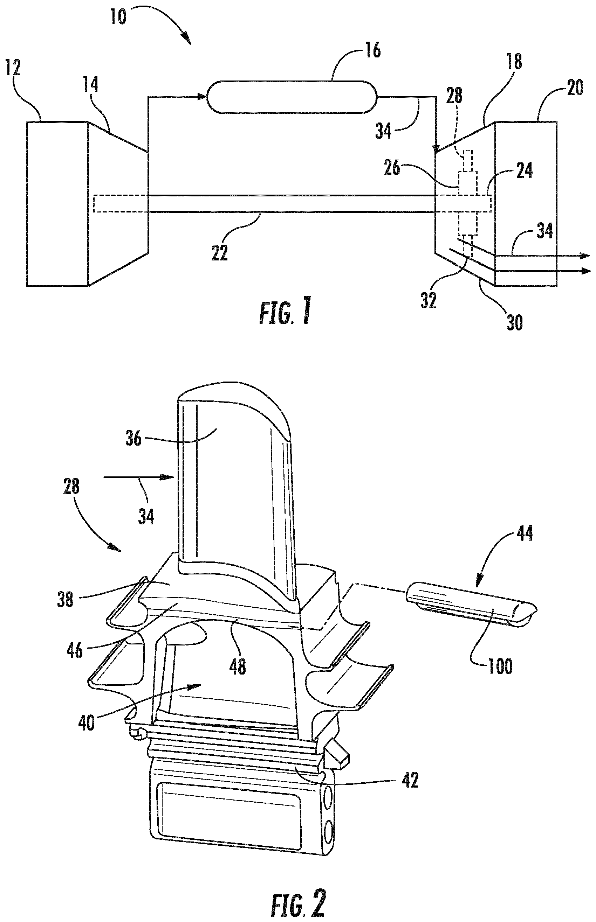

Referring now to the drawings, FIG. 1 illustrates a schematic diagram of one embodiment of a gas turbine 10. The gas turbine 10 generally includes an inlet section 12, a compressor section 14 disposed downstream of the inlet section 12, a plurality of combustors (not shown) within a combustor section 16 disposed downstream of the compressor section 14, a turbine section 18 disposed downstream of the combustor section 16 and an exhaust section 20 disposed downstream of the turbine section 18. Additionally, the gas turbine 10 may include one or more shafts 22 coupled between the compressor section 14 and the turbine section 18.

The turbine section 18 may generally include a rotor shaft 24 having a plurality of rotor disks 26 (one of which is shown) and a plurality of rotor blades 28 extending radially outwardly from and being interconnected to the rotor disk 26. Each rotor disk 26 in turn, may be coupled to a portion of the rotor shaft 24 that extends through the turbine section 18. The turbine section 18 further includes an outer casing 30 that circumferentially surrounds the rotor shaft 24 and the rotor blades 28, thereby at least partially defining a hot gas path 32 through the turbine section 18.

During operation, a working fluid such as air flows through the inlet section 12 and into the compressor section 14 where the air is progressively compressed, thus providing pressurized air to the combustors of the combustion section 16. The pressurized air is mixed with fuel and burned within each combustor to produce combustion gases 34. The combustion gases 34 flow through the hot gas path 32 from the combustor section 16 into the turbine section 18, wherein energy (kinetic and/or thermal) is transferred from the combustion gases 34 to the rotor blades 28, thus causing the rotor shaft 24 to rotate. The mechanical rotational energy may then be used to power the compressor section 14 and/or to generate electricity. The combustion gases 34 exiting the turbine section 18 may then be exhausted from the gas turbine 10 via the exhaust section 20.

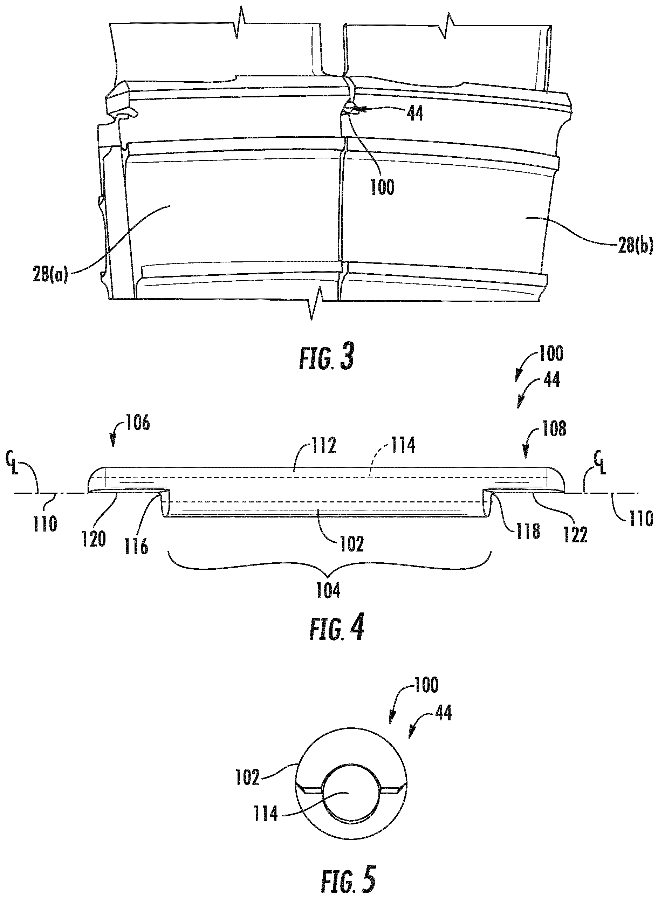

FIG. 2 illustrates a conventional turbine blade or bucket 28 including an airfoil 36, a platform 38, a shank 40 and a dovetail or mounting portion 42. FIG. 3 provides a downstream view of a pair of circumferentially adjacent turbine blades 28(a), 28(b). As shown in FIG. 2, the dovetail 42 is utilized to secure the turbine blade 28 to a periphery of the rotor disk 26 (FIG. 1), as is well understood in the art. The platform 38 defines an inward flow boundary for the combustion gases 34 flowing through the hot gas path 32 of the turbine section 18 (FIG. 1). In various embodiments of the present invention, a damper pin 44 is located along one axial edge (or slash face) 46 adjacent to (i.e., radially inward of) the turbine blade platform 38. It will be appreciated that a similar damper pin 44 is located between each adjacent pair of turbine blades 28(a), 28(b) (FIG. 3) on the rotor disk 26 (FIG. 1) as apparent from FIG. 3. In particular embodiments, as shown in FIG. 2, the damper pin 44 is located in an elongated groove 48 (FIG. 1) that extends along the entire slash face 46 of the turbine blade 28.

The damper pin 44 serves as a vibration damper. When installed, as shown in FIG. 3, the damper pin 44 is positioned between the adjacent turbine blades 28(a), 28(b). In operation, the damper pin 44 frictionally dissipates vibratory energy and reduces corresponding amplitude of vibration. The amount of vibrational energy that is removed by the damper pin 44 is a function several factors including but not limited to the dynamic weight of the damper pin 44, the geometry of the damper pin 44 and the reaction loads between the adjacent turbine blades 28(a), 28(b).

FIG. 4 provides a side view of an exemplary damper pin 100 according to one embodiment of the present invention. FIG. 5 provides an end view of the damper pin 100 as shown in FIG. 4. It is to be understood that damper pin 100 shown in FIG. 4 may be substituted for damper pin 44 as shown in FIGS. 2 and 3.

In one embodiment, as shown in FIG. 4, the damper pin 100 includes an outer body 102 having a center portion 104 that is disposed between a first end portion 106 and a second end portion 108. The first end portion, the center portion and the second end portion extend axially along and/or are coaxially aligned with centerline 110. The first end portion 106, center portion 104 and the second end portion 108 define a generally arcuate top portion 112 of the outer body 102. The top portion 112 is generally configured (sized and/or shaped) to contact with a surface of the groove 48 defined between the adjacent turbine blades 28(a), 28(b).

As shown in FIGS. 4 and 5, at least a portion of the outer body 102 defines an opening 114 (shown in dashed lines in FIG. 4) that extends axially with respect to centerline 110 at least partially through the outer body 102. The opening 114 may be at least partially defined along the first end portion 106, the center portion 104 and the second end portion 108.

As shown in FIG. 4, the first end portion 106 and/or the second end portion 108 of the damper pin 100 are substantially semi-cylindrical. The first end portion 106 and/or the second end portion 108 may intersect with the center portion 104 at shoulders 116, 118 respectively. This configuration creates flat support surfaces 120, 122 that are adapted to rest on machined turbine blade platform surfaces or shoulders at opposite ends of the groove 48 formed in the turbine blade slash face 46, thereby providing support for the damper pin 100 while preventing undesirable excessive rotation during machine operation.

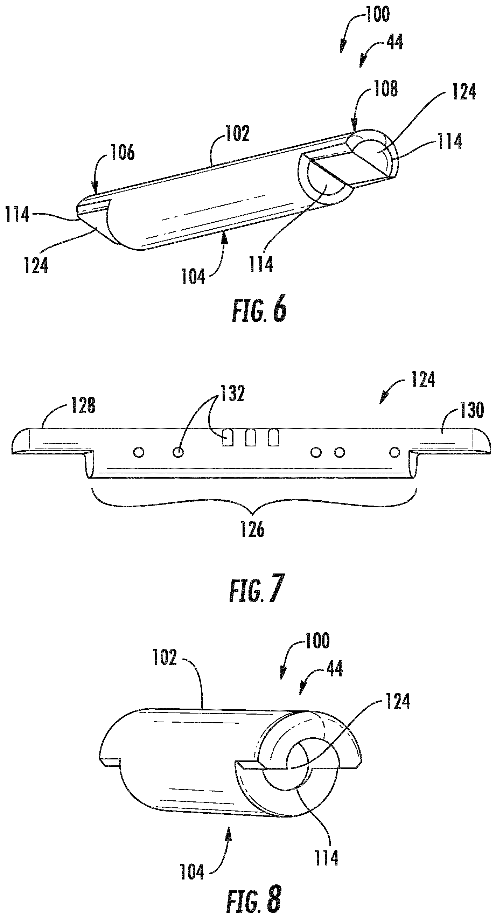

FIG. 6 is a perspective side view of the damper pin 100 according to one embodiment of the present invention. As shown in FIG. 6, the damper pin 100 further includes an core body 116 disposed at least partially within the opening 114 of the outer body 102.

FIG. 7 provides a side view of an exemplary core body 124 according to one embodiment. In one embodiment, as shown in FIG. 7 the core body 124 may include a center portion 126 disposed between a first end portion 128 and a second end portion 130. The first end portion 128 and/or the second end portion 130 may be substantially semi-cylindrical so as to be complementary to the portion of the opening 114 defined in the first end portion 106 and the second end portion 108 of the outer body 102 (FIG. 5). In particular embodiments, the core body 124 may define various voids 132 such as slots, grooves and/or apertures so as to reduce overall weight of the core body 124 and/or to have a desired effect on the overall stiffness of the damper pin 100. It is to be understood that the voids 132 may have any shape and are not limited to those shown in FIG. 7 unless otherwise recited in the claims.

In particular embodiments, the core body 124 and the outer body 102 may be formed from different materials so as to achieve a desired stiffness, a desired stiffness to weight ratio or other desired mechanical or damping property for the damping pin 100. For example, the core body 124 may be formed from a material that is of different density or elastic modulus from the outer body 102 material. For example, the outer body 102 may be formed from a metal alloy and the core body 124 may be formed from a composite material or a less dense or lighter metal alloy than the outer body 102. As a result, the core body 124 may provide the ability to tune stiffness and/or impact damping characteristics of the damper pin 100.

The core body 124 may extend at least partially through one or more of the first end portion 106, the center portion 104 and the second end portion 108 of the outer body 102. For example, in one embodiment, as shown in FIG. 6, the core body 124 may extend through the first end portion 106, the center portion 104 and the second end portion 108 of the outer body 102. In another embodiment, as shown in FIG. 8, the core body 124 may be primarily or entirely disposed within the center portion 104 of the outer body 102.

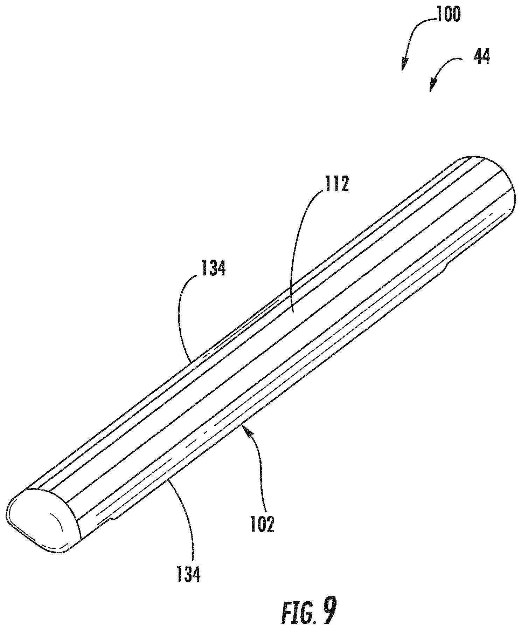

FIG. 9 provides a perspective view of the damper pin 100 according to one embodiment of the present invention. As shown in FIG. 8, at least a portion of the outer body 102 may be coated with a low-friction wear-resistant coating 134. For example, in one embodiment, as shown in FIG. 8, at least a portion of the top portion 112 of the outer body 102 may be coated with the low-friction wear-resistant coating 134. The low-friction wear-resistant coating 134 may be disposed along the top portion 112 in such a manner that the low-friction wear-resistant coating 134 is in contact with the groove 48, thus allowing for relative movement in an axial direction between the turbine blades 28(a), 28(b) and the damper pin 100.

This written description uses examples to disclose the invention and also to enable any person skilled in the art to practice the invention, including making and using any devices or systems and performing any incorporated methods. The patentable scope of the invention is defined by the claims.

## Claims

1. A damper pin (100) for damping adjacent turbine blades coupled to a rotor shaft, the damper pin comprising:
an outer body (102) having a center portion (104) disposed between a first end portion (106) and a second end portion (108), wherein the first end portion, center portion and second end portion define a generally arcuate top portion (112) of the outer body, wherein at least a portion of the outer body defines an opening (114) that extends axially therethrough; and
a core body (124) disposed at least partially within the opening of the outer body, **characterized in that**
at least one of the first end portion or the second end portion of the outer body is semi-cylindrical.

2. The damper pin as in claim 1, wherein the core body (124) and the outer body (102) are formed from different materials.

3. The damper pin as in claim 1 or 2, wherein the core body (124) is at least partially disposed within the center portion (104) of the outer body (102).

4. The damper pin as in claim 1, 2 or 3, further comprising a low-friction wear-resistant coating (134) disposed along at least a portion of the top portion (112) of the outer body (102).

5. The damper pin as in any preceding claim, wherein the core body (124) extends through each of the first end portion (106), the center portion (104) and the second end portion (108).

6. The damper pin as in any preceding claim, wherein the first end portion (106) is semi-cylindrical.

7. The damper pin as in any preceding claim, wherein the second end portion (108) is semi-cylindrical.

8. The damper pin as in any preceding claim, wherein the core body (124) includes a center portion (126) disposed between a first end portion (128) and a second end portion (130), wherein the first end portion and the second end portion are semi-cylindrical.

9. A turbine engine, comprising:
a rotor shaft (24) that extends axially within the turbine engine;
an adjacent pair of turbine blades (28) coupled to the rotor shaft, each turbine blade at least partially defining a groove (48) that extends along a slash face (46) of the corresponding turbine blade; and
a damper pin (100) as claimed in claim 1 disposed within the groove.

10. The turbine engine as in claim 9, wherein the core body (124) and the outer body (102) are formed from different materials.

11. The turbine engine as in claim 9 or 10, wherein the core body (124) is at least partially disposed within the center portion (104) of the outer body (102).

12. The turbine engine as in claim 9, 10 or 11, further comprising a low-friction wear-resistant coating (134) disposed along at least a portion of the top portion (112) of the outer body (102).

13. The turbine engine as in any of claims 9 to 12, wherein the core body (124) extends through each of the first end portion (106), the center portion (104) and the second end portion (108).

## Patentansprüche

1. Dämpfender Stift (100) zum Dämpfen von benachbarten Turbinenblättern, die an eine Rotorwelle gekoppelt sind, wobei der dämpfende Stift umfasst:
einen Außenkörper (102), der einen Mittelabschnitt (104) aufweist, der zwischen einem ersten Endabschnitt (106) und einem zweiten Endabschnitt (108) angeordnet ist, wobei der erste Endabschnitt, der Mittelabschnitt und der zweite Endabschnitt einen im Allgemeinen bogenförmigen oberen Abschnitt (112) des Außenkörpers definieren, wobei mindestens ein Abschnitt des Außenkörpers eine Öffnung (114) definiert, die sich axial hierdurch erstreckt; und
einen Kernkörper (124), der mindestens teilweise innerhalb der Öffnung des Außenkörpers angeordnet ist, **dadurch gekennzeichnet, dass**
mindestens einer von dem ersten Endabschnitt oder dem zweiten Endabschnitt oder dem Außenkörper halbyzlindrisch ist.

2. Dämpfender Stift nach Anspruch 1, wobei der Kernkörper (124) und der Außenkörper (102) aus unterschiedlichen Materialen herstellt sind.

3. Dämpfender Stift nach Anspruch 1 oder 2, wobei der Kernkörper (124) mindestens teilweise innerhalb des Mittelabschnitts (104) des Außenkörpers (102) angeordnet ist.

4. Dämpfender Stift nach Anspruch 1, 2 oder 3, weiter umfassend eine reibungsarme verschleißbeständige Beschichtung (134), die entlang mindestens eines Abschnitts des oberen Abschnitts (112) des Außenkörpers (102) angeordnet ist.

5. Dämpfender Stift nach einem der vorstehenden Ansprüche, wobei der Kernkörper (124) sich durch jeden von dem ersten Endabschnitt (106), dem Mittelabschnitt (104) und dem zweiten Endabschnitt (108) erstreckt.

6. Dämpfender Stift nach einem der vorstehenden Ansprüche, wobei der erste Endabschnitt (106) halbyzlindrisch ist.

7. Dämpfender Stift nach einem der vorstehenden Ansprüche, wobei der zweite Endabschnitt (108) halbyzlindrisch ist.

8. Dämpfender Stift nach einem der vorstehenden Ansprüche, wobei der Kernkörper (124) einen Mittelabschnitt (126) enthält, der zwischen einem ersten Endabschnitt (128) und einem zweiten Endabschnitt (130) angeordnet ist, wobei der erste Endabschnitt und der zweite Endabschnitt halbzylindrisch sind.

9. Turbinenmotor, umfassend:
eine Rotorwelle (24), die sich axial innerhalb des Turbinenmotors erstreckt;
ein benachbartes Paar von Turbinenblättern (28), die an die Rotorwelle gekoppelt sind, wobei jedes Turbinenblatt mindestens teilweise eine Rille (48) definiert, die sich entlang einer Schlitzfläche (46) des entsprechenden Turbinenblatts erstreckt; und
einen dämpfenden Stift (100) nach Anspruch 1, der innerhalb der Rille angeordnet ist.

10. Turbinenmotor nach Anspruch 9, wobei der Kernkörper (124) und der Außenkörper (102) aus unterschiedlichen Materialien hergestellt sind.

11. Turbinenmotor nach Anspruch 9 oder 10, wobei der Kernkörper (124) mindestens teilweise innerhalb des Mittelabschnitts (104) des Außenkörpers (102) angeordnet ist.

12. Turbinenmotor nach Anspruch 9, 10 oder 11, weiter umfassend eine reibungsarme verschleißbeständige Beschichtung (134), die entlang mindestens eines Abschnitts des oberen Abschnitts (112) des Außenkörpers (102) angeordnet ist.

13. Turbinenmotor nach einem der Ansprüche 9 bis 12, wobei der Kernkörper (124) sich durch jeden von dem ersten Endabschnitt (106), dem Mittelabschnitt (104) und dem zweiten Endabschnitt (108) erstreckt.

## Revendications

1. Goupille amortissante (100) pour amortir des aubes de turbine adjacentes couplées à un arbre de rotor, la goupille amortissante comprenant :
un corps externe (102) ayant une partie centrale (104) disposée entre une première partie d'extrémité (106) et une seconde partie d'extrémité (108), dans laquelle la première partie d'extrémité, la partie centrale et la seconde partie d'extrémité définissent une partie supérieure de forme générale arquée (112) du corps externe, dans laquelle au moins une partie du corps externe définit une ouverture (114) qui s'étend axialement à travers celle-ci ; et
un corps central (124) disposé au moins en partie dans l'ouverture du corps externe, **caractérisée en ce qu'**au moins l'une de la première partie d'extrémité ou de la seconde partie d'extrémité du corps externe est semi-cylindrique.

2. Goupille amortissante selon la revendication 1, dans laquelle le corps central (124) et le corps externe (102) sont formés de matériaux différents.

3. Goupille amortissante selon la revendication 1 ou 2, dans laquelle le corps central (124) est au moins en partie disposé dans la partie centrale (104) du corps externe (102).

4. Goupille amortissante selon la revendication 1, 2 ou 3, comprenant en outre un revêtement de faible friction résistant à l'usure (134) disposé le long d'au moins une fraction de la partie supérieure (112) du corps externe (102).

5. Goupille amortissante selon l'une quelconque des revendications précédentes, dans laquelle le corps central (124) s'étend à travers chacune de la première partie d'extrémité (106), de la partie centrale (104) et de la seconde partie d'extrémité (108).

6. Goupille amortissante selon l'une quelconque des revendications précédentes, dans laquelle la première partie d'extrémité (106) est semi-cylindrique.

7. Goupille amortissante selon l'une quelconque des revendications précédentes, dans laquelle la seconde partie d'extrémité (108) est semi-cylindrique.

8. Goupille amortissante selon l'une quelconque des revendications précédentes, dans laquelle le corps central (124) comprend une partie centrale (126) disposée entre une première partie d'extrémité (128) et une seconde partie d'extrémité (130), dans laquelle la première partie d'extrémité et la seconde partie d'extrémité sont semi-cylindriques.

9. Moteur à turbine comprenant :
un arbre de rotor (24) qui s'étend axialement dans le moteur à turbine ;
une paire adjacente d'aubes de turbine (28) couplées à l'arbre de rotor, chaque aube de turbine définissant au moins en partie une rainure (48) qui s'étend le long d'une face oblique (46) de l'aube de turbine correspondante ; et
une goupille amortissante (100) selon la revendication 1, disposée dans la rainure.

10. Moteur à turbine selon la revendication 9, dans lequel le corps central (124) et le corps externe (102) sont formés de matériaux différents.

11. Moteur à turbine selon la revendication 9 ou 10, dans lequel le corps central (124) est au moins en partie disposé dans la partie centrale (104) du corps externe (102).

12. Moteur à turbine selon la revendication 9, 10 ou 11, comprenant en outre un revêtement de faible friction résistant à l'usure (134) disposé le long d'au moins une fraction de la partie supérieure (112) du corps externe (102).

13. Moteur à turbine selon l'une quelconque des revendications 9 à 12, dans lequel le corps central (124) s'étend à travers chacune de la première partie d'extrémité (106), de la partie centrale (104) et de la seconde partie d'extrémité (108).
